# EUROPEAN PATENT APPLICATION

(11) **EP 4 841 885 A1**
(43) Date of publication of application: **18.11.2026**
(21) Application number: 25738848.8
(22) Date of filing: 10.01.2025
(51) Int. Cl.: H02P 21/24

(54) **MOTOR CONTROL DEVICE**

(30) Priority: 12.01.2024 JP 2024003309
(71) Applicant: General Inc., Kawasaki-shi, Kanagawa 213-8502 (JP)
(72) Inventor: URAYAMA, Masaharu, Kawasaki-shi, Kanagawa 213-8502 (JP)
(74) Representative: TBK
(86) International application number: PCT/JP2025/000595
(87) International publication number: WO 2025/150550

(57) **Abstract**

In a motor control apparatus 100a, a voltage command value generator 14 generates a voltage command value of a motor based on a velocity error between a velocity command value and velocity of the motor M, a control switching determination unit 15 determines whether or not a control region of the motor M is in a voltage saturation region, a decoupling correction value calculator 14b7A calculates a correction value for decoupling interference due to induced voltage of the motor M, and, when the control switching determination unit 15 determines that the control region is in the voltage saturation region, the voltage command value generator 14 generates a voltage amplitude of output voltage that is to be applied to the motor M and a voltage phase of the output voltage that is to be applied to the motor M, and calculates a voltage command value that is corrected by the correction value.

## Description

### [Technical Field]

The present disclosure is related to a motor control apparatus.

### Background

A technology for switching a motor control method between a region in which output voltage of a motor control apparatus does not saturate (hereinafter, may be referred to as a "normal region") and a region which includes the neighborhood of the limit value of the output voltage of the motor control apparatus and in which the output voltage of the motor control apparatus saturates (hereinafter, may be referred to as a "voltage saturation region") is known. For example, a technology for performing Maximum Torque Per Ampere (MTPA) control to maximize an output torque of a motor with respect to a current in the normal region, and controlling an amplitude (hereinafter, may be referred to as an "output voltage amplitude") and a phase of the output voltage of the motor in the voltage saturation region is known (Patent Literature 1).

### [Citation List]

### [Patent Citation]

Patent Literature 1: Japanese Laid-open Patent Publication No. 2021-125898
Patent Literature 2: Japanese Laid-open Patent Publication No. 2017-158415

### [Summary of Invention]

### [Technical Problem]

In the motor control apparatus as described above, in some cases, when the motor control method is switched, vibration or noise may occur in the motor due to discontinuity in the motor control before and after the switching. The vibration or the noise that occurs in the motor when the motor control method is switched may be referred to as "switching shock". Assuming that a region in which a voltage command value is retained at an output limit value in the voltage saturation region as a field weakening region, there is known motor control in which, to reduce the switching shock, the output voltage amplitude is adjusted such that an electrical current vector moves on an MTPA control curve in a region between a normal control region and the field weakening region, for example (Patent Literature 2).

Regarding this, the inventors of the present application have discovered that, in the voltage saturation region in which the output voltage amplitude is adjusted such that the electrical current vector moves on the MTPA control curve, when, for example, a wire-wound resistor or an inductance of the motor is small, a phenomenon in which the electrical current vector oscillates on the MTPA control curve occurs. To avoid the phenomenon as described above, it may be possible to reduce control response of the output voltage amplitude in the voltage saturation region.

However, when induced voltage of the motor varies due to a change in rotation speed of the motor, responsiveness of output voltage amplitude adjustment is impaired due to interference with the output voltage amplitude adjustment by the induced voltage of the motor (hereinafter, may be referred to as "induced voltage interference"), so that the electrical current vector deviates from the MTPA control curve and efficiency of the motor control is reduced.

To cope with this, the present disclosure proposes a technology for preventing destabilization of motor control without reducing control response of the output voltage amplitude in the voltage saturation region.

### [Solution to Problem]

A motor control apparatus according to the present disclosure includes a voltage command value generator, a control switching determination unit, and a decoupling correction value calculator. The voltage command value generator generates a voltage command value of a motor based on a velocity error between a velocity command value and velocity of the motor. The control switching determination unit determines whether or not a control region of the motor is in a voltage saturation region. The decoupling correction value calculator calculates a correction value for decoupling interference due to induced voltage of the motor. When the control switching determination unit determines that the control region is in the voltage saturation region, the voltage command value generator generates a voltage amplitude of output voltage that is to be applied to the motor and a voltage phase of the output voltage that is to be applied to the motor, and calculates a voltage command value that is corrected by the correction value.

### [Advantageous Effects of Invention]

According to the present disclosure, it is possible to prevent destabilization of motor control without reducing control response of an output voltage amplitude in a voltage saturation region.

### [Brief Description of Drawings]

[Fig. 1] FIG. 1 is a diagram illustrating a configuration example of a motor control apparatus of a first embodiment of the present disclosure.
[Fig. 2] FIG. 2 is a diagram illustrating a configuration example of a control switching determination unit of the first embodiment of the present disclosure.
[Fig. 3] FIG. 3 is a diagram illustrating a configuration example of a voltage-saturation-region voltage command value generator of the first embodiment of the present disclosure.
[Fig. 4] FIG. 4 is a diagram for explaining an operation example of the motor control apparatus of the first embodiment of the present disclosure.
[Fig. 5] FIG. 5 is a diagram for explaining an operation example of a current command value calculator of the first embodiment of the present disclosure.
[Fig. 6] FIG. 6 is a diagram for explaining an operation example of the current command value calculator of the first embodiment of the present disclosure.
[Fig. 7] FIG. 7 is a diagram illustrating a configuration example of a normal-control-region voltage command value generator of the first embodiment of the present disclosure.
[Fig. 8] FIG. 8 is a diagram illustrating a configuration example of a voltage-saturation-region voltage command value generator of a second embodiment of the present disclosure.
[Fig. 9] FIG. 9 is a diagram illustrating a configuration example of a voltage-saturation-region voltage command value generator of a third embodiment of the present disclosure.
[Fig. 10] FIG. 10 is a diagram illustrating a configuration example of a motor control apparatus of a fourth embodiment of the present disclosure.
[Fig. 11] FIG. 11 is a diagram illustrating a configuration example of a voltage-saturation-region voltage command value generator of the fourth embodiment of the present disclosure.
[Fig. 12] FIG. 12 is a diagram illustrating a configuration example of a normal-control-region voltage command value generator of the fourth embodiment of the present disclosure.
[Fig. 13] FIG. 13 is a diagram illustrating a configuration example of a voltage-saturation-region voltage command value generator of a fifth embodiment of the present disclosure.

### [Embodiments for Carrying Out the Invention]

Embodiments of the present disclosure will be described below based on the drawings. In the embodiments below, the same components are denoted by the same reference symbols.

### [First Embodiment]

### <Configuration of motor control apparatus>

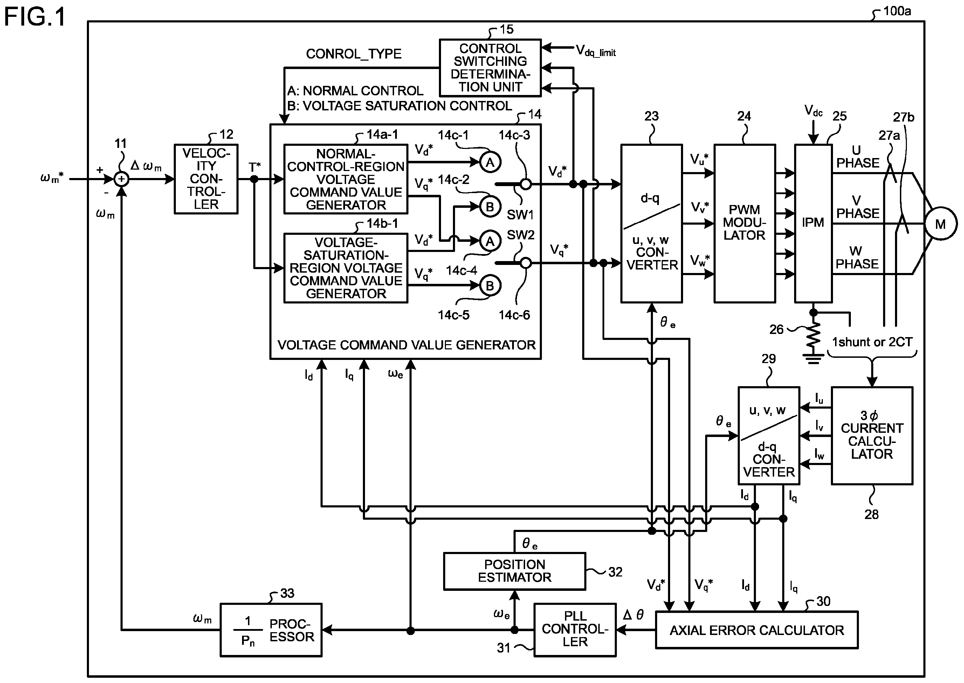

FIG. 1 is a diagram illustrating a configuration example of a motor control apparatus of a first embodiment of the present disclosure. In FIG. 1, a motor control apparatus 100a includes a subtractor 11, a velocity controller 12, a voltage command value generator 14, a control switching determination unit 15, a d-q/u, v, w converter 23, a Pulse Width Modulation (PWM) modulator 24, and an Intelligent Power Module (IPM) 25. The IPM 25 is connected to a motor M. Examples of the motor M include a Permanent Manet Synchronous Motor (PMSM).

Further, the motor control apparatus 100a includes a shunt resistor 26, one of current sensors 27a and 27b, and a 3φ current calculator 28.

Furthermore, the motor control apparatus 100a includes a u, v, w/d-q converter 29, an axial error calculator 30, a Phase Locked Loop (PLL) controller 31, a position estimator 32, and a 1/Pn processor 33.

The voltage command value generator 14 includes a normal-control-region voltage command value generator 14a-1, a voltage-saturation-region voltage command value generator 14b-1, a switch SW1, and a switch SW2. The switch SW1 includes contact points 14c-1, 14c-2, and 14c-3. The switch SW2 includes contact points 14c-4, 14c-5, and 14c-6.

The subtractor 11 calculates an angular velocity error Δωm by subtracting a mechanical angle estimated angular velocity ωm, which is current estimated angular velocity that is output by the 1/Pn processor 33, from a mechanical angular velocity command value ωm^{*}, which is input to the motor control apparatus 100a from an external apparatus (for example, a higher-level controller) of the motor control apparatus 100a, and outputs the calculated angular velocity error Δωm to the velocity controller 12.

The velocity controller 12 generates a torque command value T^{*} such that the angular velocity error Δωm approaches zero in accordance with Expression (1) based on Proportional Integral (PI) control, and outputs the generated torque command value T^{*} to the voltage command value generator 14. In Expression (1), kp represents a proportional gain of the PI control, and ki represents an integral gain of the PI control. ${T}^{∗} = {k}_{p} ⋅ \left(Δ{ω}_{m}\right) + {k}_{i} ⋅ \int \left(Δ{ω}_{m}\right) dt$ (1)

The voltage command value generator 14 generates, in each of the normal control region and the voltage saturation region, a d-axis voltage command value Vd^{*} and a q-axis voltage command value Vq^{*} based on the torque command value T^{*} that is output by the velocity controller 12, and outputs the generated d-axis voltage command value Vd^{*} and the generated q-axis voltage command value Vq^{*}. The voltage saturation region is a region in which the output voltage amplitude Va saturates in a high RPM region of the motor Mand and field weakening control is performed. The normal control region is a region outside the voltage saturation region and is a region in which the motor M is controlled by changing the output voltage, and, in the normal control region, maximum torque per ampere control or the like is performed.

When the control switching determination unit 15 outputs a control signal CONTROL_TYPE: A (normal control), the voltage command value generator 14 connects the contact point 14c-1 and the contact point 14c-3 of the switch SW1, connects the contact point 14c-4 and the contact point 14c-6 of the switch SW2, and outputs the d-axis voltage command value Vd^{*} and the q-axis voltage command value Vq^{*} that are generated by the normal-control-region voltage command value generator 14a-1 to the d-q/u, v, w converter 23. In contrast, when the control switching determination unit 15 outputs a control signal CONTROL_TYPE: B (voltage saturation control), the voltage command value generator 14 connects the contact point 14c-2 and the contact point 14c-3 of the switch SW1, connects the contact point 14c-5 and the contact point 14c-6 of the switch SW2, and outputs the d-axis voltage command value Vd^{*} and the q-axis voltage command value Vq^{*} that are generated by the voltage-saturation-region voltage command value generator 14b-1 to the d-q/u, v, w converter 23.

The control switching determination unit 15 determines whether a current control region of the motor M is the normal control region or the voltage saturation region based on an output voltage limit value Vdq_limit, the d-axis voltage command value Vd^{*}, and the q-axis voltage command value Vq^{*}. Further, the control switching determination unit 15 outputs the control signal CONTROL_TYPE: A (normal control) to the voltage command value generator 14 when determining that the current control region of the motor M is the normal control region, and outputs the control signal CONTROL_TYPE: B (voltage saturation control) to the voltage command value generator 14 when determining that the current control region of the motor M is the voltage saturation region. The output voltage limit value Vdq_limit is obtained by converting direct-current voltage Vdc, which is supplied to the IPM 25 from an external apparatus of the IPM 25 (for example, a power converter (not illustrated)), to a voltage value in a dq rotating coordinate system that is a control system.

The d-q/u, v, w converter 23 converts the d-axis voltage command value Vd^{*} and the q-axis voltage command value Vq^{*} in two phases, which are output by the voltage command value generator 14, to a U-phase output voltage command value Vu^{*}, a V-phase output voltage command value Vv^{*}, and a W-phase output voltage command value Vw^{*} in three phases, based on an electrical phase angle (dq-axis angle) θe that is a current rotor position that is output by the position estimator 32. Further, the d-q/u, v, w converter 23 outputs the U-phase output voltage command value Vu^{*}, the V-phase output voltage command value Vv^{*}, and the W-phase output voltage command value Vw^{*} to the PWM modulator 24.

The PWM modulator 24 generates a six-phase PWM signal based on the U-phase output voltage command value Vu^{*}, the V-phase output voltage command value Vv^{*}, the W-phase output voltage command value Vw^{*}, and a PWM carrier signal, and outputs the generated six-phase PWM signal to the IPM 25.

The IPM 25 generates alternating-current voltage to be applied to each of the U-phase, the V-phase, and the W-phase of the motor M by converting the direct-current voltage Vdc that is supplied from outside of the IPM 25 based on the six-phase PWM signal that is output by the PWM modulator 24, and applies the alternating-current voltage to each of the U-phase, the V-phase, and the W-phase of the motor 10.

The 3φ current calculator 28, when a bus current is detected by a single-shunt method using the shunt resistor 26, calculates a U-phase current value Iu, a V-phase current value Iv, and a W-phase current value Iw of the motor M based on six-phase PWM switching information that is output from the PWM modulator 24 and the detected bus current. Alternatively, when the current sensors 27a and 27b detect a U-phase current and a V-phase current, the 3φ current calculator 28 calculates a remaining W-phase current value Iw based on the Kirchhoff's Law, that is, "Iu + Iv + Iw = 0". The 3φ current calculator 28 outputs the calculated respective-phase current values Iu, Iv, and Iw to the u, v, w/d-q converter 29. In this manner, the shunt resistor 26 and the 3φ current calculator 28 correspond to a current detector that detects the U-phase current value Iu, the V-phase current value Iv, and the W-phase current value Iw. Further, the U-phase current value Iu, the V-phase current value Iv, and the W-phase current value Iw correspond to a motor current that flows through the motor M.

The u, v, w/d-q converter 29 converts the U-phase current value Iu, the V-phase current value Iv, and the W-phase current value Iw in three phases, which are output by the 3φ current calculator 28, to a d-axis current Id and a q-axis current Iq in two phases, based on an electrical phase angle θe that is output by the position estimator 32 and that indicates a current rotor position. Further, the u, v, w/d-q converter 29 outputs the d-axis current Id and the q-axis current Iq to the voltage command value generator 14 and the axial error calculator 30.

The axial error calculator 30 calculates an axial error Δθ (a difference between an estimated rotation axis and an actual rotation axis) by using the d-axis voltage command value Vd^{*} and the q-axis voltage command value Vq^{*} that are output by the voltage command value generator 14 and the d-axis current Id and the q-axis current Iq that are output by the u, v, w/d-q converter 29. Further, the axial error calculator 30 outputs the calculated axial error Δθ to the PLL controller 31.

The PLL controller 31 calculates an electrical estimated angular velocity ωe that is a current estimated angular velocity based on the axial error Δθ that is output by the axial error calculator 30, and outputs the calculated electrical estimated angular velocity ωe to the position estimator 32 and the 1/Pn processor 33.

The position estimator 32 estimates the electrical phase angle θe based on the electrical estimated angular velocity ωe that is output by the PLL controller 31, and outputs the estimated electrical phase angle θe to the d-q/u, v, w converter 23 and the u, v, w/d-q converter 29.

The 1/Pn processor 33 calculates the mechanical angle estimated angular velocity ωm by dividing the electrical estimated angular velocity ωe that is output by the PLL controller 31 by the number of pole pairs Pn of the motor M, and outputs the calculated mechanical angle estimated angular velocity ωm to the subtractor 11.

### <Configuration of control switching determination unit>

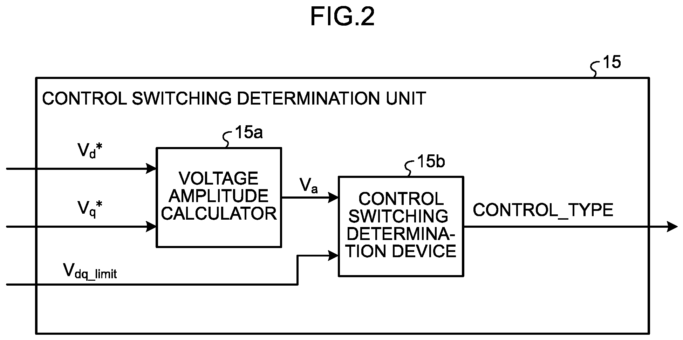

FIG. 2 is a diagram illustrating a configuration example of the control switching determination unit of the first embodiment of the present disclosure. In FIG. 2, the control switching determination unit 15 includes a voltage amplitude calculator 15a and a control switching determination device 15b, and determines whether the current control region of the motor is the normal control region or the voltage saturation region as described below.

The voltage amplitude calculator 15a calculates an output voltage amplitude Va based on the d-axis voltage command value Vd^{*} and the q-axis voltage command value Vq^{*}, which are output by the voltage command value generator 14, in accordance with Expression (2) below. ${V}_{a} = \sqrt{{\left({V}_{d}^{∗}\right)}^{2} + {\left({V}_{q}^{∗}\right)}^{2}}$ (2)

The control switching determination device 15b compares the output voltage amplitude Va that is calculated by the voltage amplitude calculator 15a (or a peak value of the output voltage amplitude Va when output voltage varies) and the output voltage limit value Vdq_limit.

When the output voltage amplitude Va is smaller than the output voltage limit value Vdq_limit, the control switching determination device 15b determines that the current control region of the motor M is the normal control region and outputs the control signal CONTROL_TYPE: A to the voltage command value generator 14.

In contrast, when the output voltage amplitude Va is equal to or larger than the output voltage limit value Vdq_limit, the control switching determination device 15b determines that the current control region of the motor M is the voltage saturation region and outputs the control signal CONTROL_TYPE: B to the voltage command value generator 14.

### <Configuration of voltage-saturation-region voltage command value generator>

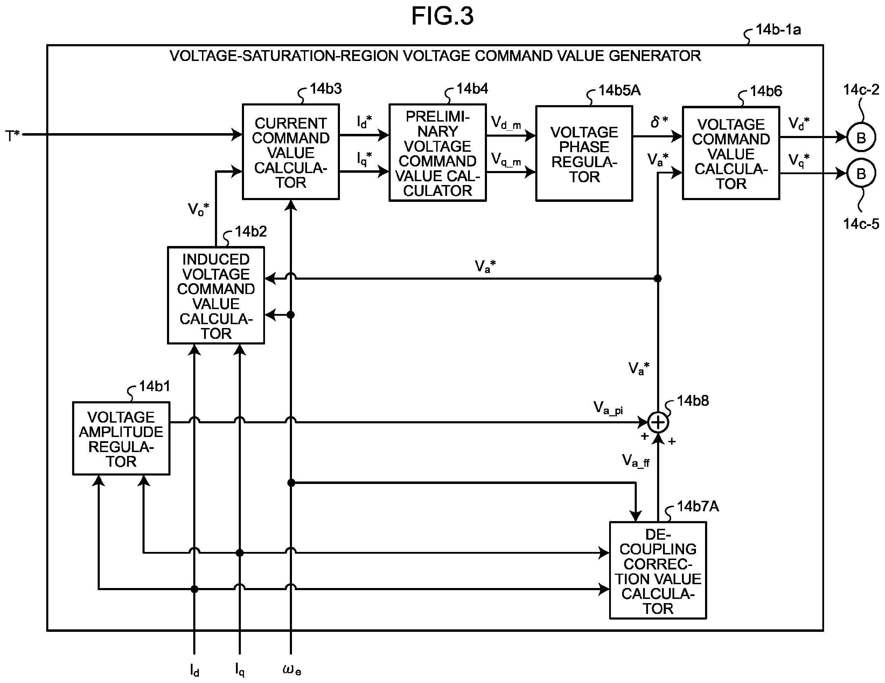

FIG. 3 is a diagram illustrating a configuration example of the voltage-saturation-region voltage command value generator of the first embodiment of the present disclosure. A voltage-saturation-region voltage command value generator 14b-1a illustrated in FIG. 3 corresponds to the voltage-saturation-region voltage command value generator 14b-1 illustrated in FIG. 1. In FIG. 3, the voltage-saturation-region voltage command value generator 14b-1a includes a voltage amplitude regulator 14b1, an induced voltage command value calculator 14b2, a current command value calculator 14b3, a preliminary voltage command value calculator 14b4, a voltage phase regulator 14b5A, a voltage command value calculator 14b6, a decoupling correction value calculator 14b7A, and an adder 14b8.

The voltage amplitude regulator 14b1 generates a PI voltage command value Va_pi that is adjusted such that the electrical current vector moves on the MTPA control curve, based on the d-axis current Id and the q-axis current Iq that are output by the u, v, w/d-q converter 29, and outputs the generated PI voltage command value Va_pi to the adder 14b8. Details of a process that is performed by the voltage amplitude regulator 14b1 will be described later.

The decoupling correction value calculator 14b7A calculates a voltage amplitude decoupling correction value Va_ff for decoupling induced voltage interference, based on the electrical estimated angular velocity ωe that is output by the PLL controller 31 and the d-axis current Id and the q-axis current Iq that are output by the u, v, w/d-q converter 29, and outputs the calculated voltage amplitude decoupling correction value Va_ff to the adder 14b8. Details of a process that is performed by the decoupling correction value calculator 14b7A will be described later.

The adder 14b8 calculates a voltage amplitude command value Va^{*} by adding the PI voltage command value Va_pi that is output by the voltage amplitude regulator 14b1 and the voltage amplitude decoupling correction value Va_ff that is output by the decoupling correction value calculator 14b7A, and outputs the calculated voltage amplitude command value Va^{*} to the induced voltage command value calculator 14b2 and the voltage command value calculator 14b6.

The induced voltage command value calculator 14b2 calculates an induced voltage command value Vo^{*} based on the voltage amplitude command value Va^{*}, in accordance with a motor model formula represented by Expression (3.1) and Expression (3.2) based on a current d-axis current Id, a current q-axis current Iq, and a current electrical estimated angular velocity ωe. Meanwhile, Expression (3.1) and Expression (3.2) may be configured as motor model formulas that do not include transient terms (p/Ld/Id and p/Lq/Iq) when a motor current does not vary. Details of calculation of the induced voltage command value Vo^{*} will be described below.

A voltage equation of PMSM (d-axis voltage Vd and q-axis voltage Vq), a theoretical formula of the output voltage amplitude Va, and a theoretical formula of the induced voltage Vo of the motor M are represented by Expression (3.1) to Expression (5). In Expression (3.1) to Expression (5), R represents a wire-wound resistor of the motor M, Ψa represents armature flux linkage of the motor M, Ld represents a d-axis inductance of the motor M, and Lq represents a q-axis inductance of the motor M. ${V}_{d} = R ⋅ {I}_{d} + p ⋅ {L}_{d} ⋅ {I}_{d} - {ω}_{e} ⋅ {L}_{q} ⋅ {I}_{q}$ (3.1) ${V}_{q} = R ⋅ {I}_{q} + p ⋅ {L}_{q} ⋅ {I}_{q} + {ω}_{e} ⋅ {L}_{d} ⋅ {I}_{d} + {ω}_{e} ⋅ {Ψ}_{a}$ (3.2) ${V}_{a} = \sqrt{{{V}_{d}}^{2} + {{V}_{q}}^{2}}$ (4) ${V}_{o} = {ω}_{e} ⋅ \sqrt{{\left({L}_{d}⋅{I}_{d}+{Ψ}_{a}\right)}^{2} + {\left({L}_{q}⋅{I}_{q}\right)}^{2}}$ (5)

Furthermore, Expression for associating the voltage amplitude command value Va^{*} and the induced voltage command value Vo^{*} from Expression (3.1) to Expression (5) is represented by Expression (6). Therefore, the induced voltage command value calculator 14b2 calculates the induced voltage command value Vo^{*} in accordance with Expression (6), and outputs the calculated induced voltage command value Vo^{*} to the current command value calculator 14b3. Expression (6) may be configured as a motor model formula that does not include transient terms (p/Ld/Id and p/Lq/Iq) when a motor current does not vary, similarly to Expression (3.1) and Expression (3.2). ${{V}_{o}}^{*} = \sqrt{\begin{matrix}{{V}_{o}}^{* 2} - {\left(R⋅{I}_{d}+p⋅{L}_{d}⋅{I}_{d}\right)}^{2} - 2 ⋅ \left(R⋅{I}_{d}+p⋅{L}_{d}⋅{I}_{d}\right) ⋅ \left(-{ω}_{e}⋅{L}_{q}⋅{I}_{q}\right) \\ - {\left(R⋅{I}_{q}+p⋅{L}_{q}⋅{I}_{q}\right)}^{2} - 2 ⋅ \left(R⋅{I}_{q}+p⋅{L}_{q}⋅{I}_{q}\right) ⋅ \left({ω}_{e}⋅{L}_{d}⋅{I}_{d}+{ω}_{e}⋅{Ψ}_{a}\right)\end{matrix}}$ (6)

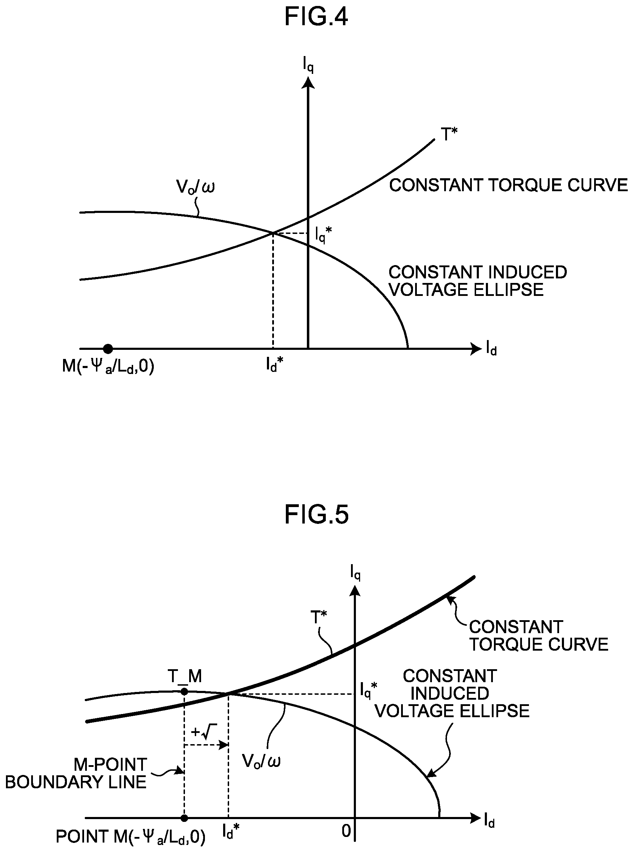

As illustrated in FIG. 4, the current command value calculator 14b3 calculates a q-axis current command value Iq^{*} and a d-axis current command value Id^{*} based on an intersection of a constant torque curve, which is a trajectory of a current for which the torque command value T^{*} is constant, and a constant induced voltage ellipse, which is a trajectory of a current for which the induced voltage command value Vo^{*} and the electrical estimated angular velocity ωe are constant. FIG. 4 is a diagram for explaining an operation example of the motor control apparatus of the first embodiment of the present disclosure. The current command value calculator 14b3 outputs the calculated q-axis current command value Iq^{*} and the calculated d-axis current command value Id^{*} to the preliminary voltage command value calculator 14b4.

The intersection of the constant torque curve and the constant induced voltage ellipse may be calculated by using, for example, a motor torque formula that is represented by Expression (7) and an induced voltage formula that is represented by Expression (8). $T = {P}_{n} ⋅ \left\{{Ψ}_{a}⋅{I}_{q}+\left({L}_{d}-{L}_{q}\right)⋅{I}_{d}⋅{I}_{q}\right\}$ (7) ${V}_{o} = {ω}_{e} ⋅ \sqrt{{\left({L}_{d}⋅{I}_{d}+{Ψ}_{a}\right)}^{2} + {\left({L}_{q}⋅{I}_{q}\right)}^{2}}$ (8)

By eliminating the d-axis current Id from Expression (7) and Expression (8), a quartic equation related to the q-axis current Iq is obtained as represented by Expression (9). However, in Expression (9), ΔL = Ld - Lq. ${\left(ΔL\right)}^{2} ⋅ {{I}_{q}}^{4} + \left\{{{Ψ}_{a}}^{2}-{\left(\frac{{V}_{o} ⋅ Δ L}{{ω}_{e} ⋅ {L}_{q}}\right)}^{2}\right\} ⋅ {{I}_{q}}^{2} - 2 ⋅ {Ψ}_{a} ⋅ \frac{T ⋅ {L}_{d}}{{P}_{n} ⋅ {L}_{q}} ⋅ {I}_{q} + {\left(\frac{T ⋅ {L}_{d}}{{P}_{n} ⋅ {L}_{q}}\right)}^{2} = 0$ (9)

As solutions to the quartic equation as represented by Expression (9), by applying, for example, Newton's method to the quartic equation as represented by Expression (9), it is possible to derive solutions corresponding to the q-axis current command value Iq^{*} at the intersection of the constant torque curve, which is a trajectory of a current for which the torque command value T^{*} is constant, and the constant induced voltage ellipse, which is a trajectory of a current for which the induced voltage command value Vo^{*} and the electrical estimated angular velocity ωe are constant (see FIG. 4).

After calculation of the q-axis current command value Iq*, the current command value calculator 14b3 calculates the d-axis current command value Id* based on the q-axis current command value Iq*, in accordance with Expression (10) that is obtained by transforming the induced voltage formula represented by Expression (8) into a d-axis current formula. ${I}_{d} = \frac{\pm \sqrt{{\left(\frac{{V}_{o}}{{ω}_{e}}\right)}^{2} - {\left({L}_{q}⋅{I}_{q}\right)}^{2}} - {Ψ}_{a}}{{L}_{d}}$ (10)

Here, in Expression (10), whether positive or negative is taken as a sign related to √ is determined by calculating a torque (hereinafter, may be referred to as an "M-point boundary torque T_M") at a point of intersection of a straight line (hereinafter, may be referred to as an "M-point boundary line") that is parallel to the Iq axis and that passes through a point M (-Ψa/Ld, 0) that is the center of the constant induced voltage ellipse and the constant induced voltage ellipse, and comparing the M-point boundary torque T_M and the torque command value T*.

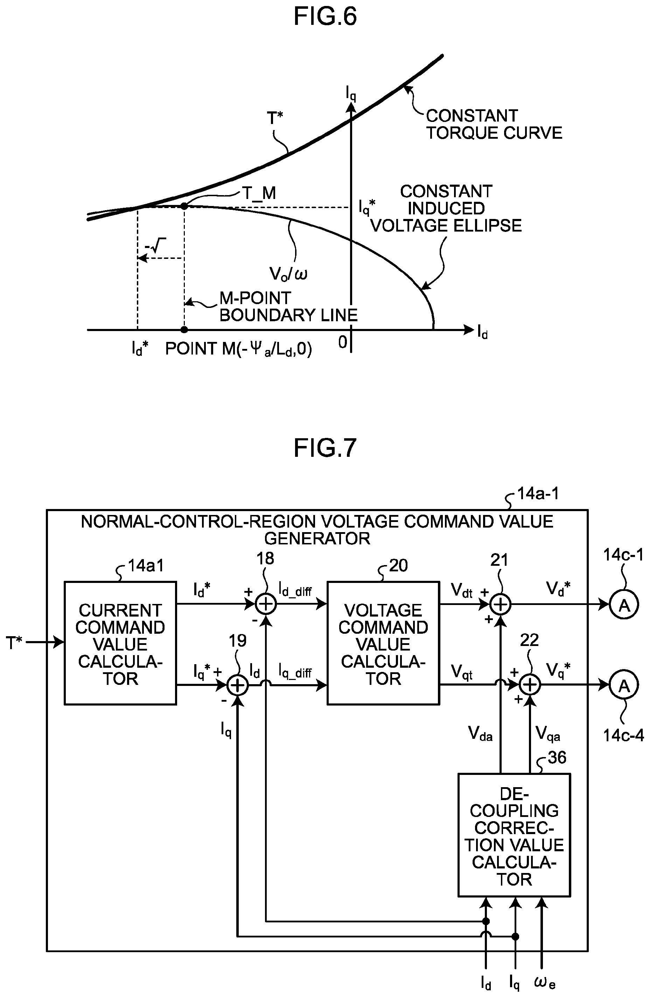

A procedure of calculating the d-axis current command value Id* and the q-axis current command value Iq* will be described below. FIG. 5 and FIG. 6 are diagrams for explaining an operation example of the current command value calculator of the first embodiment of the present disclosure.

The current command value calculator 14b3 first calculates a d-axis current Id_M at the point M in accordance with Expression (11). ${I}_{d _ M} = - \frac{{Ψ}_{a}}{{L}_{d}}$ (11)

Subsequently, the current command value calculator 14b3 calculates a q-axis current Iq_M at the point of intersection of the M-point boundary line and the constant induced voltage ellipse. The q-axis current Iq_M is calculated by substituting the d-axis current Id_M at the point M into Expression (8), and therefore is calculated in accordance with Expression (12). ${I}_{q _ M} = \frac{{V}_{o}}{{ω}_{e} ⋅ {L}_{q}}$ (12)

Therefore, the current command value calculator 14b3 calculates the M-point boundary torque T_M in accordance with Expression (13). ${T}_{_ M} = {P}_{n} ⋅ \left\{{Ψ}_{a}⋅{I}_{q _ M}+\left({L}_{d}-{L}_{q}\right)⋅{I}_{d _ M}⋅{I}_{q _ M}\right\}$ (13)

Furthermore, the current command value calculator 14b3 determines the d-axis current command value Id^{*} based on a magnitude relationship between the torque command value T^{*} and the M-point boundary torque T_M, in accordance with Expression (14.1) and Expression (14.2). Expression (14.1) represents the d-axis current command value Id^{*} when "the torque command value T^{*} ≤ the M-point boundary torque T_M" (see FIG. 5), and Expression (14.2) represents the d-axis current command value Id^{*} when "the torque command value T^{*} > the M-point boundary torque T_M"(see FIG. 6). $\begin{matrix}\left[{T}^{∗}≦T_M\right] \\ {{I}_{d}}^{∗} = \frac{+ \sqrt{{\left(\frac{{{V}_{o}}^{∗}}{{ω}_{e}}\right)}^{2} - {\left({L}_{q}⋅{{I}_{q}}^{∗}\right)}^{2}} - {Ψ}_{a}}{{L}_{d}}\end{matrix}$ (14.1) $\begin{matrix}\left[{T}^{∗}>T_M\right] \\ {{I}_{d}}^{∗} = \frac{- \sqrt{{\left(\frac{{{V}_{o}}^{∗}}{{ω}_{e}}\right)}^{2} - {\left({L}_{q}⋅{{I}_{q}}^{∗}\right)}^{2}} - {Ψ}_{a}}{{L}_{d}}\end{matrix}$ (14.2)

The current command value calculator 14b3 outputs the d-axis current command value Id^{*} and the q-axis current command value Iq^{*} that are calculated as described above to the preliminary voltage command value calculator 14b4.

The preliminary voltage command value calculator 14b4 calculates a preliminary d-axis voltage command value Vd_m and a preliminary q-axis voltage command value Vq_m by feedforward based on the electrical estimated angular velocity ωe, the d-axis current command value Id^{*}, and the q-axis current command value Iq^{*}, in accordance with motor model formulas represented by Expression (15.1) and Expression (15.2). Meanwhile, Expression (15.1) and Expression (15.2) may be configured as motor model formulas that do not include transient terms (p/Ld/Id and p/Lq/Iq) when a motor current does not vary, similarly to Expression (3.1) and Expression (3.2). The preliminary voltage command value calculator 14b4 outputs the calculated preliminary d-axis voltage command value Vd_m and the calculated preliminary q-axis voltage command value Vq_m to the voltage phase regulator 14b5A. ${V}_{d _ m} = R ⋅ {I}_{d} * + p ⋅ {L}_{d} ⋅ {I}_{d} - {ω}_{e} ⋅ {L}_{q} ⋅ {I}_{q} *$ (15.1) ${V}_{q _ m} = R ⋅ {{I}_{q}}^{∗} + p ⋅ {L}_{q} ⋅ {I}_{q} + {ω}_{e} ⋅ \left({L}_{d}⋅{{I}_{d}}^{∗}+{Ψ}_{a}\right)$ (15.2)

The voltage phase regulator 14b5A adjusts a voltage phase command value δ^{*} based on the preliminary d-axis voltage command value Vd_m and the preliminary q-axis voltage command value Vq_m in accordance with Expression (16), and outputs the adjusted voltage phase command value δ^{*} to the voltage command value calculator 14b6. In this manner, in the voltage saturation region, by adjusting the voltage phase command value δ^{*} by feedforward in accordance with the torque command value T^{*}, so that it is possible to speed up torque response in the voltage saturation region. Therefore, for example, it is possible to improve vibration-damping efficiency when vibration-damping is performed on the motor M in the voltage saturation region, and it is possible to prevent sudden velocity change of the motor M due to disturbance. $δ = Atan \left(-\frac{{V}_{d _ m}}{{V}_{q _ m}}\right)$ (16)

The voltage command value calculator 14b6 calculates the d-axis voltage command value Vd* and the q-axis voltage command value Vq* by performing coordinate transformation from the polar coordinates to the Cartesian coordinates based on the adjusted voltage phase command value δ* and the adjusted voltage amplitude command value Va* in accordance with Expression (17.1) and Expression (17.2). ${{V}_{d}}^{∗} = - {{V}_{a}}^{∗} ⋅ sin δ$ (17.1) ${{V}_{q}}^{∗} = {{V}_{a}}^{∗} ⋅ cos δ$ (17.2)

### <Generation of voltage amplitude command value Va*>

Generation of the voltage amplitude command value Va* by the voltage amplitude regulator 14b1, the decoupling correction value calculator 14b7A, and the adder 14b8 will be described below.

The voltage amplitude regulator 14b1 calculates a d-axis current Id_mtpa* on the MTPA control curve based on the current q-axis current Iq such that the current electrical current vector moves on the MTPA control curve in accordance with Expression (18), and calculates the PI voltage command value Va_pi such that an error between the d-axis current Id_mtpa* and the current d-axis current Id on the MTPA control curve is reduced in accordance with Expression (19). The voltage amplitude regulator 14b1 outputs the calculated PI voltage command value Va_pi to the adder 14b8. In Expression (18) and Expression (19), Ψa represents armature flux linkage of the motor M, Ld represents a d-axis inductance of the motor M, Lq represents a q-axis inductance of the motor M, kp represents a proportional gain of the PI control, and ki represents an integral gain of the PI control. ${{I}_{d _ mtpa}}^{*} = \frac{{Ψ}_{a}}{2 ⋅ \left({L}_{q}-{L}_{d}\right)} - \sqrt{\frac{{{Ψ}_{a}}^{2}}{4 ⋅ {\left({L}_{q}-{L}_{d}\right)}^{2}} + {{I}_{q}}^{2}}$ (18) ${V}_{a _ pi} = {k}_{p} ⋅ \left({{I}_{d _ mtpa}}^{*}-{I}_{d}\right) + {k}_{i} ⋅ \int \left({{I}_{d _ mtpa}}^{*}-{I}_{d}\right) dt$ (19)

In contrast, the decoupling correction value calculator 14b7A calculates a d-axis decoupling correction value Vd_ff and a q-axis decoupling correction value Vq_ff for decoupling the induced voltage interference in accordance with Expression (20) and Expression (21). Further, the decoupling correction value calculator 14b7A calculates a composite induced voltage vector amplitude based on the d-axis decoupling correction value Vd_ff and the q-axis decoupling correction value Vq_ff in accordance with Expression (22), and outputs the calculated composite induced voltage vector amplitude, as the voltage amplitude decoupling correction value Va_ff, to the adder 14b8. ${V}_{d _ ff} = - {ω}_{e} ⋅ {L}_{q} ⋅ {I}_{q}$ (20) ${V}_{q _ ff} = {ω}_{e} ⋅ \left({L}_{d}⋅{I}_{d}+{Ψ}_{a}\right)$ (21) ${V}_{a _ ff} = \sqrt{{{V}_{d _ ff}}^{2} + {{V}_{q _ ff}}^{2}}$ (22)

The adder 14b8 generates the voltage amplitude command value Va^{*}, for which the induced voltage interference is decoupled, by adding the voltage amplitude decoupling correction value Va_ff that is output by the decoupling correction value calculator 14b7A to the PI voltage command value Va_pi that is output by the voltage amplitude regulator 14b1, in accordance with Expression (23). ${{V}_{a}}^{∗} = {V}_{a _ pi} + {V}_{a _ ff}$ (23)

### <Configuration of normal-control-region voltage command value generator>

FIG. 7 is a diagram illustrating a configuration example of the normal-control-region voltage command value generator of the first embodiment of the present disclosure. In FIG. 7, the normal-control-region voltage command value generator 14a-1 includes a current command value calculator 14a1, subtractors 18 and 19, a voltage command value calculator 20, adders 21 and 22, and a decoupling correction value calculator 36.

The current command value calculator 14a1 calculates the q-axis current command value Iq^{*} and the d-axis current command value Id^{*} based on an intersection of a constant torque curve, which is a trajectory of a current for which the torque command value T^{*} is constant, and the MTPA control curve.

Here, the intersection of the constant torque curve and the MTPA control curve may be calculated by using, for example, the motor torque formula that is represented by Expression (7), and Expression (18) that represents a relationship between the d-axis current Id and the q-axis current Iq on the MTPA control curve. Meanwhile, on the right side of Expression (7), the first term represents a magnet torque and a second item represents a reluctance torque, where the magnet torque includes only the q-axis current Iq and the reluctance torque include both of the q-axis current Iq and the d-axis current Id. Therefore, by appropriately controlling the q-axis current Iq and the d-axis current Id, it is possible to generate an appropriate torque in the motor M.

By eliminating the d-axis current Id from Expression (8) and Expression (18), Expression (24)is obtained, which is a quartic equation related to the q-axis current Iq.${\left({L}_{d}-{L}_{q}\right)}^{2} ⋅ {{I}_{q}}^{4} + {Ψ}_{a} ⋅ \frac{T}{{P}_{n}} ⋅ {I}_{q} - {\left(\frac{T}{{P}_{n}}\right)}^{2} = 0$ (24)

As solutions to the quartic equation as represented by Expression (24), by applying, for example, Newton's method to the quartic equation as represented by Expression (24), it is possible to derive solutions corresponding to the q-axis current command value Iq^{*} at the intersection of the constant torque curve of the torque command value T^{*} and the MTPA control curve. Further, the current command value calculator 14a1 calculates he d-axis current command value Id^{*} based on the q-axis current command value Iq^{*} that is derived by using Expression (24), in accordance with Expression (25). ${{I}_{d}}^{*} = \frac{{Ψ}_{a}}{2 ⋅ \left({L}_{q}-{L}_{d}\right)} - \sqrt{\frac{{{Ψ}_{a}}^{2}}{4 ⋅ {\left({L}_{q}-{L}_{d}\right)}^{2}} + {{I}_{q}}^{* 2}}$ (25)\

The subtractor 18 calculates a d-axis current error Id_diff, which is an error between the d-axis current command value Id^{*} and the d-axis current Id, by subtracting the d-axis current Id that is output by the u, v, w/d-q converter 29 from the d-axis current command value Id^{*} that is output by the current command value calculator 14a1. The subtractor 19 calculates a q-axis current error Iq_diff, which is an error between the q-axis current command value Iq^{*} and the q-axis current Iq, by subtracting the q-axis current Iq that is output by the u, v, w/d-q converter 29 from the q-axis current command value Iq^{*} that is output by the current command value calculator 14a1.

The voltage command value calculator 20 calculates a pre-decoupling d-axis voltage command value Vdt by performing PI control on the d-axis current error Id_diff in accordance with Expression (26.1). Further, the voltage command value calculator 20 calculates a pre-decoupling q-axis voltage command value Vqt by performing PI control on the q-axis current error Iq_diff in accordance with Expression (26.2). Meanwhile, kp_d in Expression (26.1) and kp_q in Expression (26.2) are proportional gains, and ki_d in Expression (26.1) and ki_q in Expression (26.2) are integral gains. ${V}_{dt} = {k}_{p _ d} ⋅ \left({I}_{d _ diff}\right) + {k}_{i _ d} ⋅ \int \left({I}_{d _ diff}\right) dt$ (26.1) ${V}_{qt} = {k}_{p _ q} ⋅ \left({I}_{q _ diff}\right) + {k}_{i _ q} ⋅ \int \left({I}_{q _ diff}\right) dt$ (26.2)

The decoupling correction value calculator 36 generates a d-axis decoupling correction value Vda for correcting the pre-decoupling d-axis voltage command value Vdt in accordance with Expression (27), based on the electrical estimated angular velocity ωe that is output by the PLL controller 31 and the d-axis current Id and the q-axis current Iq that are output by the u, v, w/d-q converter 29. Further, the decoupling correction value calculator 36 generates a q-axis decoupling correction value Vqa for correcting the pre-decoupling q-axis voltage command value Vqt in accordance with Expression (28), based on the electrical estimated angular velocity ωe that is output by the PLL controller 31 and the d-axis current Id and the q-axis current Iq that are output by the u, v, w/d-q converter 29. The d-axis decoupling correction value Vda and the q-axis decoupling correction value Vqa are correction values for cancelling, by feedforward, interference terms between dq axes. Here, it is preferable that a decoupling correction value is a value that is converted to direct current in order to realize stable control,. Therefore, to generate the decoupling correction value, it may be possible to use, as for velocity, an electrical angular velocity command value ωe* that is input from an external apparatus (for example, a higher-level controller) of the motor control apparatus 100a, and, it may be possible to use, as for the d-axis current Id and the q-axis current Iq, the d-axis current Id and the q-axis current Iq from which a noise component is removed by an Infinite Impulse Response Filter (IIR filter). Meanwhile, the IIR filter is one example of a noise removal filter. ${V}_{da} = - {ω}_{e} ⋅ {L}_{q} ⋅ {I}_{q}$ (27) ${V}_{qa} = {ω}_{e} ⋅ \left({L}_{d}⋅{I}_{d}+{Ψ}_{a}\right)$ (28)

The adder 21 calculates the d-axis voltage command value Vd* by adding the d-axis decoupling correction value Vda to the pre-decoupling d-axis voltage command value Vdt in accordance with Expression (29). The adder 22 calculates the q-axis voltage command value Vq* by adding the q-axis decoupling correction value Vqa to the pre-decoupling q-axis voltage command value Vqt in accordance with Expression (30). Consequently, it is possible to calculate the d-axis voltage command value Vd* and the q-axis voltage command value Vq* for which interference between the dq axes is cancelled by feedforward. ${{V}_{d}}^{∗} = {V}_{dt} + {V}_{da}$ (29) ${{V}_{q}}^{∗} = {V}_{qt} + {V}_{qa}$ (30)

Thus, the first embodiment of the present disclosure has been described.

### [Second Embodiment]

### <Configuration of voltage-saturation-region voltage command value generator>

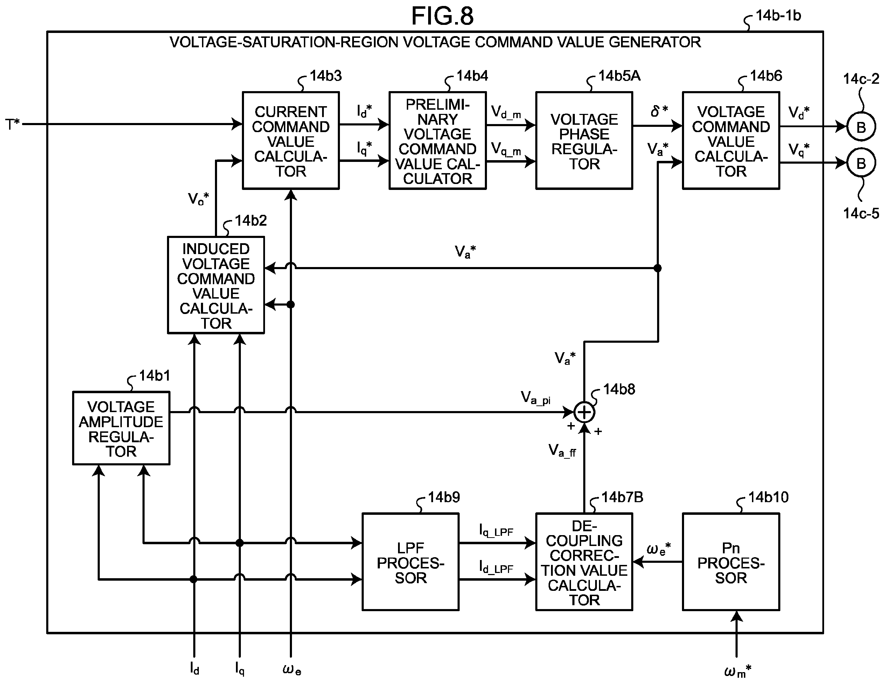

FIG. 8 is a diagram illustrating a configuration example of the voltage-saturation-region voltage command value generator of the second embodiment of the present disclosure. A voltage-saturation-region voltage command value generator 14b-1b illustrated in FIG. 8 corresponds to the voltage-saturation-region voltage command value generator 14b-1 illustrated in FIG. 1. In FIG. 8, the voltage-saturation-region voltage command value generator 14b-1b includes the voltage amplitude regulator 14b1, the induced voltage command value calculator 14b2, the current command value calculator 14b3, the preliminary voltage command value calculator 14b4, the voltage phase regulator 14b5A, the voltage command value calculator 14b6, a decoupling correction value calculator 14b7B, the adder 14b8, a Low Pass Filter (LPF) processor 14b9, and a Pn processor 14b10. In the following, a difference from the voltage-saturation-region voltage command value generator 14b-1a of the first embodiment will be described.

The LPF processor 14b9 removes high-frequency noise from the d-axis current Id and the q-axis current Iq by performing LPF processing on the d-axis current Id and the q-axis current Iq that are output by the u, v, w/d-q converter 29, and outputs a d-axis current Id_LPF that is obtained by removing the high-frequency noise and a q-axis current Iq_LPF that is obtained by removing the high-frequency noise to the decoupling correction value calculator 14b7B.

The Pn processor 14b10 calculates the electrical angular velocity command value ωe^{*} by multiplying the mechanical angular velocity command value ωm^{*}, which is input to the motor control apparatus 100a from an external apparatus (for example, a higher-level controller) of the motor control apparatus 100a, by the number of pole pairs Pn of the motor M, and outputs the calculated electrical angular velocity command value ωe^{*} to the decoupling correction value calculator 14b7B.

The decoupling correction value calculator 14b7B calculates the voltage amplitude decoupling correction value Va_ff for decoupling the induced voltage interference in accordance with Expression (31), Expression (32), and Expression (33), and outputs the calculated voltage amplitude decoupling correction value Va_ff to the adder 14b8. ${V}_{d _ ff} = - {ω}_{e} * ⋅ {L}_{q} ⋅ {I}_{q _ LPF}$ (31) ${V}_{q _ ff} = {{ω}_{e}}^{∗} ⋅ \left({L}_{d}⋅{I}_{d _ LPF}+{Ψ}_{a}\right)$ (32) ${V}_{a _ ff} = \sqrt{{{V}_{d _ ff}}^{2} + {{V}_{q _ ff}}^{2}}$ (33)

Thus, the second embodiment of the present disclosure has been described.

### [Third Embodiment]

### <Configuration of voltage-saturation-region voltage command value generator>

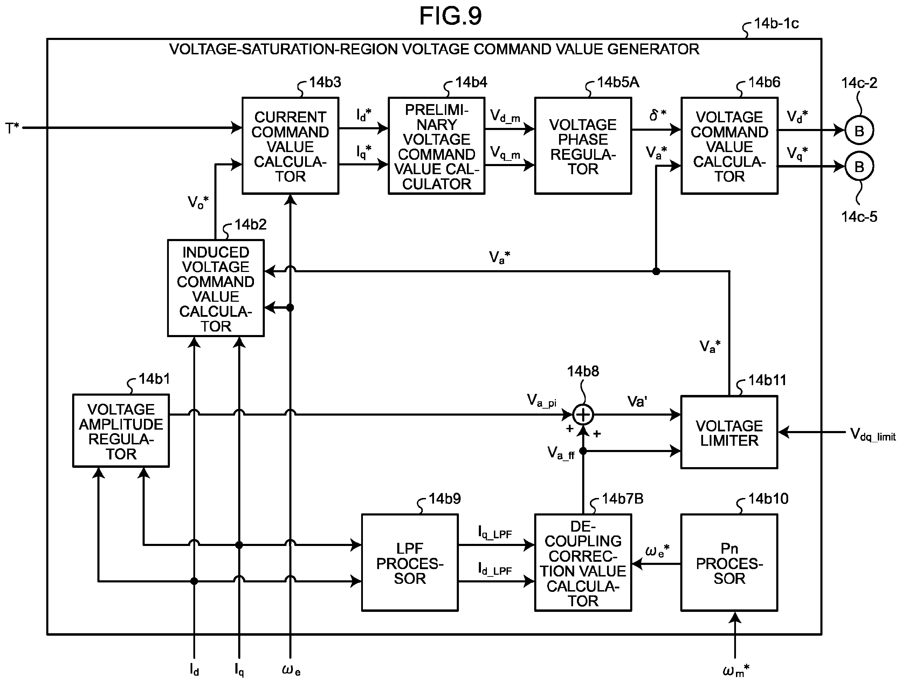

FIG. 9 is a diagram illustrating a configuration example of a voltage-saturation-region voltage command value generator of the third embodiment of the present disclosure. A voltage-saturation-region voltage command value generator 14b-1c illustrated in FIG. 9 corresponds to the voltage-saturation-region voltage command value generator 14b-1 illustrated in FIG. 1. In FIG. 9, the voltage-saturation-region voltage command value generator 14b-1c includes the voltage amplitude regulator 14b1, the induced voltage command value calculator 14b2, the current command value calculator 14b3, the preliminary voltage command value calculator 14b4, the voltage phase regulator 14b5A, the voltage command value calculator 14b6, the decoupling correction value calculator 14b7B, the adder 14b8, the Low Pass Filter (LPF) processor 14b9, the Pn processor 14b10, and a voltage limiter 14b11. In the following, a difference from the voltage-saturation-region voltage command value generator 14b-1a of the first embodiment and the voltage-saturation-region voltage command value generator 14b-1b of the second embodiment will be described.

The adder 14b8 calculates a voltage amplitude command value Va' by adding the PI voltage command value Va_pi that is output by the voltage amplitude regulator 14b1 and the voltage amplitude decoupling correction value Va_ff that is output by the decoupling correction value calculator 14b7B, and outputs the calculated voltage amplitude command value Va' to the voltage limiter 14b11.

The output voltage limit value Vdq_limit is input to the voltage limiter 14b11. The voltage limiter 14b11 controls the voltage amplitude command value Va' that is input from the adder 14b8, in accordance with Expression (34.1) and Expression (34.2). Specifically, when the voltage amplitude command value Va' reaches the output voltage limit value Vdq_limit, the voltage limiter 14b11 limits the voltage amplitude command value Va^{*} to the output voltage limit value Vdq_limit. ${V}_{a} ′ \leq {V}_{dq _ limit} ⇒ {{V}_{a}}^{∗} = {V}_{a} ′$ (34.1) ${V}_{a} ′ > {V}_{dq _ limit} ⇒ {{V}_{a}}^{∗} = {V}_{dq _ limit}$ (34.2)

Meanwhile, the voltage limiter 14b11 limits an integrator output Va_i (not illustrated) of the voltage amplitude regulator 14b1 to be subjected to PI control, to a voltage limit value Va_i_limit in accordance with Expression (35.2) that is represented by Expression (35.1). ${V}_{a _ i _ limit} = {V}_{dq _ limit} - {V}_{a _ ff}$ (35.1) ${V}_{a _ i} > {V}_{a _ i _ limit} ⇒ {V}_{a _ i} = {V}_{a _ i _ limit}$ (35.2)

Thus, the third embodiment of the present disclosure has been described.

### [Fourth Embodiment]

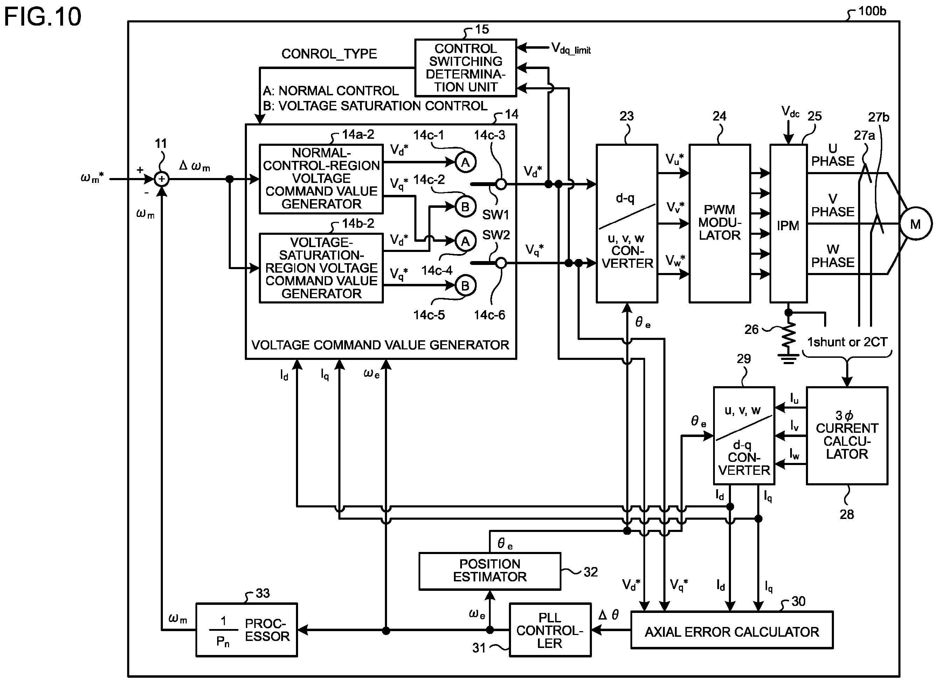

FIG. 10 is a diagram illustrating a configuration example of a motor control apparatus of the fourth embodiment of the present disclosure. In FIG. 10, a motor control apparatus 100b includes the subtractor 11, the voltage command value generator 14, the control switching determination unit 15, the d-q/u, v, w converter 23, the PWM modulator 24, and the IPM 25. The IPM 25 is connected to the motor M.

Further, the motor control apparatus 100b includes the shunt resistor 26, the current sensors 27a and 27b, and the 3φ current calculator 28. Meanwhile, the motor control apparatus 100b only need to include the shunt resistor 26 or the current sensors 27a and 27b.

Furthermore, the motor control apparatus 100b includes the u, v, w/d-q converter 29, the axial error calculator 30, the PLL controller 31, the position estimator 32, and the 1/Pn processor 33.

The voltage command value generator 14 includes a normal-control-region voltage command value generator 14a-2, a voltage-saturation-region voltage command value generator 14b-2, the switch SW1, and the switch SW2. The switch SW1 includes the contact points 14c-1, 14c-2, and 14c-3. The switch SW2 includes the contact points 14c-4, 14c-5, and 14c-6.

A difference from the motor control apparatus 100a of the first embodiment will be described below.

In the motor control apparatus 100b illustrated in FIG. 10, the subtractor 11 outputs the calculated angular velocity error Δωm to the normal-control-region voltage command value generator 14a-2 and the voltage-saturation-region voltage command value generator 14b-2.

### <Configuration of voltage-saturation-region voltage command value generator>

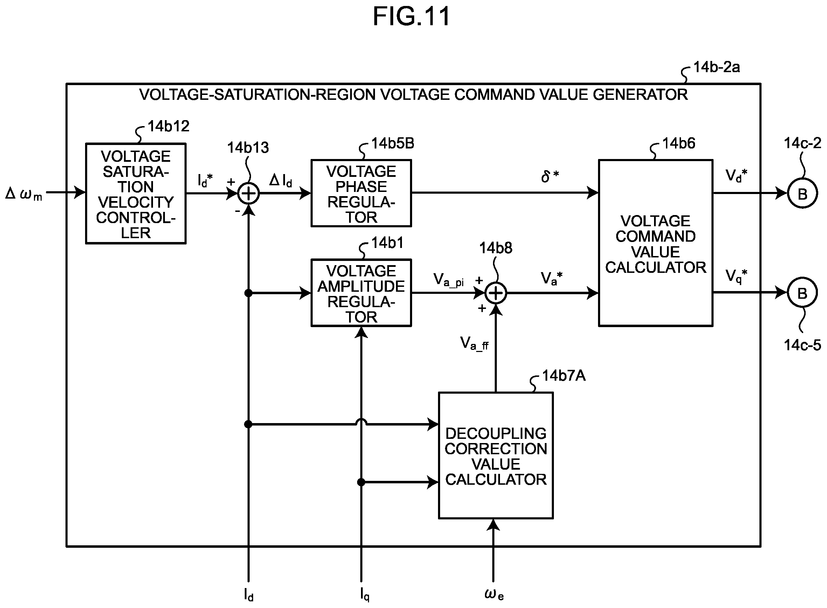

FIG. 11 is a diagram illustrating a configuration example of a voltage-saturation-region voltage command value generator of the fourth embodiment of the present disclosure. A voltage-saturation-region voltage command value generator 14b-2a illustrated in FIG. 11 corresponds to the voltage-saturation-region voltage command value generator 14b-2 illustrated in FIG. 10. In FIG. 11, the voltage-saturation-region voltage command value generator 14b-2a includes the voltage amplitude regulator 14b1, a voltage phase regulator 14b5B, the voltage command value calculator 14b6, the decoupling correction value calculator 14b7A, the adder 14b8, a voltage saturation velocity controller 14b12, and the subtractor 14b13.

The voltage saturation velocity controller 14b12 generates the d-axis current command value Id* such that the angular velocity error Δωm approaches zero in accordance with, for example, Expression (36) based on PI control, and outputs the generated d-axis current command value Id* to the subtractor 14b13. In Expression (36), kp represents a negative value of a proportional gain of the PI control, and ki represents a negative value of an integral gain of the PI control. ${{I}_{d}}^{*} = {k}_{p} ⋅ \left(Δ{ω}_{m}\right) + {k}_{i} ⋅ \int \left(Δ{ω}_{m}\right) dt$ (36)

The subtractor 14b13 calculates the d-axis current error ΔId by subtracting the d-axis current Id that is output by the u, v, w/d-q converter 29 from the d-axis current command value Id* that is output by the voltage saturation velocity controller 14b12, and outputs the calculated d-axis current error ΔId to the voltage phase regulator 14b5B.

The voltage phase regulator 14b5B adjusts the voltage phase command value δ* such that the d-axis current error ΔId approaches zero in accordance with, for example, Expression (37) based on PI control, and outputs the adjusted voltage phase command value δ* to the voltage command value calculator 14b6. In Expression (37), kp represents a negative value of a proportional gain of the PI control, and ki represents a negative value of an integral gain of the PI control. ${δ}^{∗} = {k}_{p} ⋅ \left(Δ{I}_{d}\right) + {k}_{i} ⋅ \int \left(Δ{I}_{d}\right) dt$ (37)

### <Configuration of normal-control-region voltage command value generator>

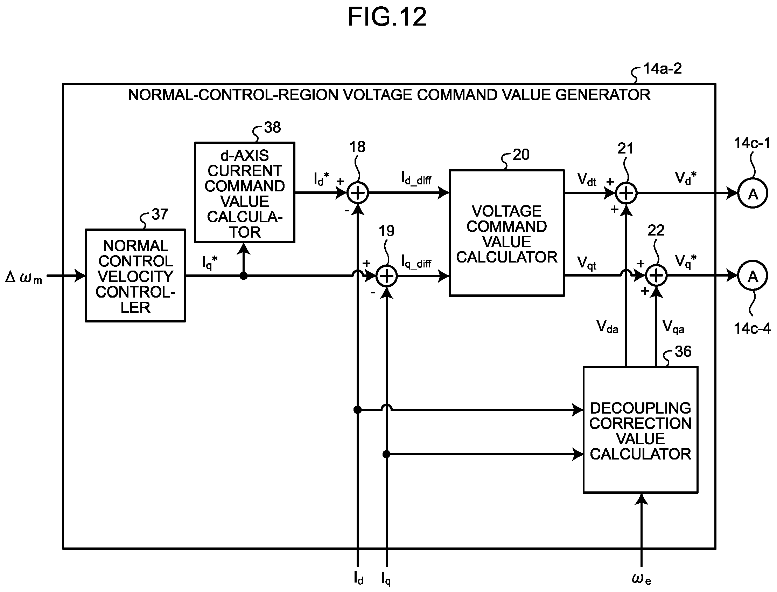

FIG. 12 is a diagram illustrating a configuration example of a normal-control-region voltage command value generator of the fourth embodiment of the present disclosure. In FIG. 12, the normal-control-region voltage command value generator 14a-2 includes the adders 21 and 22, the subtractors 18 and 19, the voltage command value calculator 20, the decoupling correction value calculator 36, a normal control velocity controller 37, and a d-axis current command value calculator 38.

The normal control velocity controller 37 generates the q-axis current command value Iq* such that the angular velocity error Δωm approaches zero in accordance with, for example, Expression (38) based on PI control, and outputs the generated q-axis current command value Iq* to the d-axis current command value calculator 38 and the subtractor 19. In Expression (38), kp represents a proportional gain of the PI control, and ki represents an integral gain of the PI control. ${{I}_{q}}^{*} = {k}_{p} ⋅ \left(Δ{ω}_{m}\right) + {k}_{i} ⋅ \int \left(Δ{ω}_{m}\right) dt$ (38)

The d-axis current command value calculator 38 calculates the d-axis current command value Id^{*} based on the q-axis current command value Iq^{*} in accordance with Expression (25), and outputs the calculated d-axis current command value Id^{*} to the subtractor 19.

Thus, the fourth embodiment of the present disclosure has been described.

### [Fifth Embodiment]

### <Configuration of voltage-saturation-region voltage command value generator>

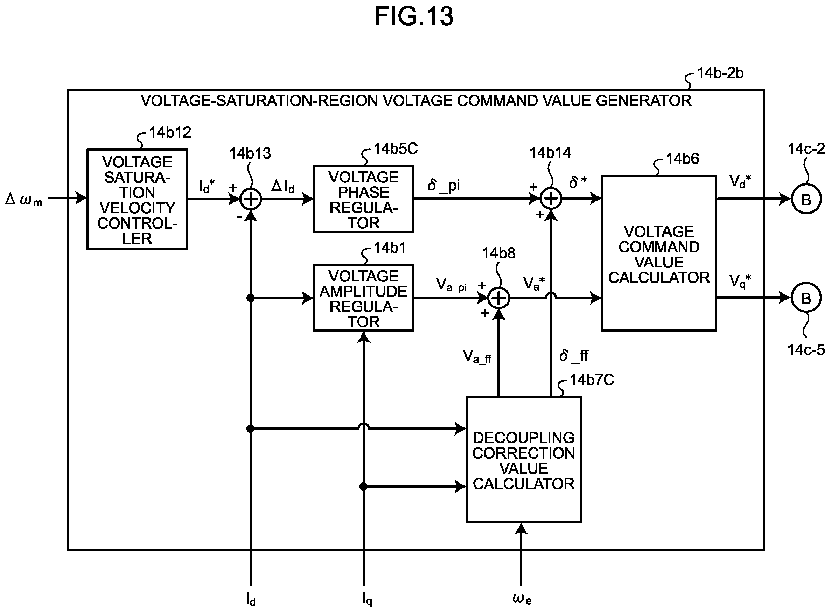

FIG. 13 is a diagram illustrating a configuration example of a voltage-saturation-region voltage command value generator of the fifth embodiment of the present disclosure. A voltage-saturation-region voltage command value generator 14b-2b illustrated in FIG. 13 corresponds to the voltage-saturation-region voltage command value generator 14b-2 illustrated in FIG. 10. In FIG. 13, the voltage-saturation-region voltage command value generator 14b-2b includes the voltage amplitude regulator 14b1, a voltage phase regulator 14b5C, the voltage command value calculator 14b6, the decoupling correction value calculator 14b7C, the adder 14b8, an adder 14b14, the voltage saturation velocity controller 14b12, and the subtractor 14b13. In the following, a difference from the voltage-saturation-region voltage command value generator 14b-2a of the fourth embodiment will be described.

The voltage phase regulator 14b5B adjusts the voltage phase command value δ_pi such that the d-axis current error ΔId approaches zero in accordance with, for example, Expression (39) based on PI control, and outputs the adjusted voltage phase command value δ_pi to the adder 14b14. In Expression (39), kp represents a negative value of a proportional gain of the PI control, and ki represents a negative value of an integral gain of the PI control. ${δ}_{_ pi} = {k}_{p} ⋅ \left(Δ{I}_{d}\right) + {k}_{i} ⋅ \int \left(Δ{I}_{d}\right) dt$ (39)

The decoupling correction value calculator 14b7C calculates the d-axis decoupling correction value Vd_ff and the q-axis decoupling correction value Vq_ff for decoupling the induced voltage interference in accordance with Expression (20) and Expression (21). Further, the decoupling correction value calculator 14b7C calculates a composite induced voltage vector amplitude from the d-axis decoupling correction value Vd_ff and the q-axis decoupling correction value Vq_ff in accordance with Expression (22), and outputs the calculated composite induced voltage vector amplitude as the voltage amplitude decoupling correction value Va_ff to the adder 14b8.

Further, the decoupling correction value calculator 14b7C calculates a voltage phase decoupling correction value δ_ff for decoupling the induced voltage interference based on the d-axis decoupling correction value Vd_ff and the q-axis decoupling correction value Vq_ff in accordance with Expression (40), and outputs the calculated voltage phase decoupling correction value δ_ff to the adder 14b14. ${δ}_{_ ff} = Atan \left(-\frac{{V}_{d _ ff}}{{V}_{q _ ff}}\right)$ (40)

The adder 14b14 calculates the voltage phase command value δ^{*}, by which the induced voltage interference is decoupled, by adding the voltage phase decoupling correction value δ_ff that is output by the decoupling correction value calculator 14b7C to the voltage phase command value δ_pi that is output by the voltage phase regulator 14b5B in accordance with Expression (41), and outputs the calculated voltage phase command value δ^{*} to the voltage command value calculator 14b6. ${δ}^{∗} = {δ}_{_ pi} + {δ}_{_ ff}$ (41)

Meanwhile, the decoupling correction value calculator 14b7C of the fifth embodiment may calculate the voltage amplitude decoupling correction value Va_ff based on the electrical angular velocity command value ωe^{*}, the d-axis current Id_LPF that is obtained by removing high-frequency noise, and the q-axis current Iq_LPF that is obtained by removing high-frequency noise, similarly to the decoupling correction value calculator 14b7B of the second embodiment. Further, the voltage-saturation-region voltage command value generator 14b-2b of the fifth embodiment may include the voltage limiter 14b11 similarly to the voltage-saturation-region voltage command value generator 14b-1c of the third embodiment.

Thus, the fifth embodiment has been described above.

As described above, a motor control apparatus of the present disclosure (the motor control apparatuses 100a and 100b of one embodiment) includes a voltage command value generator (the voltage command value generator 14 of one embodiment), a control switching determination unit (the control switching determination unit 15 of one embodiment), a decoupling correction value calculator (the decoupling correction value calculators 14b7A, 14b7B, and 14b7C of one embodiment). The voltage command value generator generates a voltage command value of a motor based on a velocity error between a velocity command value and velocity of the motor (the motor M of one embodiment). The control switching determination unit determines whether or not a control region of the motor is in a voltage saturation region. The decoupling correction value calculator calculates a correction value for decoupling interference due to induced voltage of the motor. Further, when the control switching determination unit determines that the control region is in the voltage saturation region, the voltage command value generator generates a voltage amplitude of output voltage that is to be applied to the motor and a voltage phase of the output voltage that is to be applied to the motor, and calculates a voltage command value that is corrected by the correction value.

For example, the motor control apparatus of the present disclosure (the motor control apparatuses 100a and 100b of one embodiment) includes a current detector (the shunt resistor 26 and the 3φ current calculator 28 of one embodiment) that detects a motor current, and a converter (the u, v, w/d-q converter 29 of one embodiment) that converts the motor current detected by the current detector to a d-axis current and a q-axis current. Further, when the control switching determination unit determines that the control region is in the voltage saturation region, the voltage command value generator adjusts the voltage amplitude of the output voltage of the motor such that the motor current moves on an MTPA control curve based on the d-axis current and the q-axis current, and calculates the voltage command value by adding the correction value to the adjusted voltage amplitude.

With this configuration, it is possible to decouple the interference due to the induced voltage of the motor in the voltage saturation region, so that it is possible to prevent destabilization of motor control without reducing control response of the output voltage amplitude.

Furthermore, the motor control apparatus of the present disclosure (the motor control apparatus 100a of one embodiment) includes a subtractor (the subtractor 11 of one embodiment) that calculates a velocity error between the velocity command value and current velocity of the motor, and a torque command value generator (the velocity controller 12 of one embodiment) that generates a torque command value in accordance with the velocity error. The voltage command value generator generates the voltage command value based on the torque command value.

With this configuration, in the motor control apparatus including the voltage command value generator that generates the voltage command value from the torque command value, it is possible to share the torque command value generator between the normal control region and the voltage saturation region.

Moreover, the motor control apparatus of the present disclosure (the motor control apparatuses 100a and 100b of one embodiment) includes a noise remover (the LPF processor 14b9 of one embodiment) that removes noise included in a motor current that flows through the motor. The decoupling correction value calculator calculates the correction value based on the motor current from which noise is removed.

With this configuration, it is possible to prevent destabilization of motor control due to superimposition of noise onto the correction value.

Furthermore, the motor control apparatus of the present disclosure (the motor control apparatuses 100a and 100b of one embodiment) includes an adder (the adder 14b8 of one embodiment) that adds the correction value to the voltage amplitude and outputs, as an addition result, the voltage amplitude to which the correction value is added, and a limiter (the voltage limiter 14b11 of one embodiment) that limits the addition result by a voltage amplitude of maximum voltage. The voltage command value generator calculates the voltage command value based on the addition result.

With this configuration, it is possible to smoothly perform transition from MTPA control to field weakening control by adjusting the voltage phase, and it is possible to prevent destabilization of control due to windup of an integrator that is used to adjust the output voltage amplitude at the time of the field weakening control.

Moreover, the motor control apparatus of the present disclosure (the motor control apparatus 100b of one embodiment) includes a first subtractor (the subtractor 11 of one embodiment), a d-axis current command value calculator (the voltage saturation velocity controller 14b12 of one embodiment), a second subtractor (the subtractor 14b13 of one embodiment), and a voltage phase generator (the voltage phase regulator 14b5B of one embodiment). The first subtractor calculates a velocity error between the velocity command value and current velocity of the motor. The d-axis current command value calculator calculates a d-axis current command value in accordance with the velocity error. The second subtractor calculates a d-axis current error between the d-axis current command value and a current d-axis current of the motor. The voltage phase generator generates the voltage phase in accordance with the d-axis current error. Furthermore, the voltage command value generator calculates the voltage command value based on the voltage phase.

With this configuration, even in the method of generating the voltage phase in accordance with the d-axis current error, it is possible to decouple interference due to the induced voltage of the motor in the voltage saturation region, so that it is possible to prevent destabilization of motor control without reducing control response of the output voltage amplitude.

Moreover, the decoupling correction value calculator (the decoupling correction value calculator 14b7C of one embodiment) calculates a first correction value for correcting the voltage amplitude and a second correction value for correcting the voltage phase.

With this configuration, it is possible to correct both of the voltage amplitude width and the voltage phase that are subjected to PI control, so that it is possible to more effectively realize prevention of reduction in control response of the output voltage amplitude and prevention of destabilization of the motor control.

### Reference Signs List

100a, 100b motor control apparatus
14 voltage command value generator
15 control switching determination unit
14b7A, 14b7B, 14b7C decoupling correction value calculator
11, 14b13 subtractor
12 velocity controller
14b9 LPF processor
26 shunt resistor
28 3φ current calculator
29 u, v, w/d-q converter
14b8 adder
14b11 voltage limiter
14b12 voltage saturation velocity controller
14b15 voltage phase regulator

## Claims

1. A motor control apparatus comprising:
a voltage command value generator that generates a voltage command value of a motor based on a velocity error between a velocity command value and velocity of the motor;
a control switching determination unit that determines whether or not a control region of the motor is in a voltage saturation region; and
a decoupling correction value calculator that calculates a correction value for decoupling interference due to induced voltage of the motor, wherein
when the control switching determination unit determines that the control region is in the voltage saturation region, the voltage command value generator generates a voltage amplitude of output voltage that is to be applied to the motor and a voltage phase of the output voltage that is to be applied to the motor, and calculates a voltage command value that is corrected by the correction value.

2. The motor control apparatus according to claim 1, further including:
a noise remover that removes noise included in a motor current that flows through the motor, wherein
the decoupling correction value calculator calculates the correction value based on the motor current from which the noise is removed.

3. The motor control apparatus according to claim 2, further including:
a current detector that detects the motor current; and
a converter that converts the motor current detected by the current detector to a d-axis current and a q-axis current, wherein
when the control switching determination unit determines that the control region is in the voltage saturation region, the voltage command value generator adjusts the voltage amplitude of the output voltage of the motor such that the motor current moves on an MTPA control curve based on the d-axis current and the q-axis current, and calculates the voltage command value by adding the correction value to the adjusted voltage amplitude.

4. The motor control apparatus according to claim 3, further including:
an adder that adds the correction value to the voltage amplitude and outputs, as an addition result, the voltage amplitude to which the correction value is added; and
a limiter that limits the addition result by a limit value of the voltage amplitude, wherein
the voltage command value generator calculates the voltage command value based on the addition result.

5. The motor control apparatus according to claim 1, further including:
a subtractor that calculates a velocity error between the velocity command value and velocity of the motor; and
a torque command value generator that generates a torque command value in accordance with the velocity error, wherein
the voltage command value generator generates the voltage command value based on the torque command value.

6. The motor control apparatus according to claim 3, further including:
a first subtractor that calculates a velocity error between the velocity command value and velocity of the motor;
a d-axis current command value calculator that calculates a d-axis current command value in accordance with the velocity error;
a second subtractor that calculates a d-axis current error between the d-axis current command value and a d-axis current of the motor; and
a voltage phase generator that generates the voltage phase in accordance with the d-axis current error, wherein
the voltage command value generator calculates the voltage command value based on the voltage phase.

7. The motor control apparatus according to claim 5, wherein the decoupling correction value calculator calculates a first correction value for correcting the voltage amplitude and a second correction value for correcting the voltage phase.
